Europäisches Patentamt

European Patent Office

Office européen des brevets

(11) Numéro de publication : **0 398 803 B1**

# (12) FASCICULE DE BREVET EUROPEEN

(45) Date de publication du fascicule du brevet :
**12.01.94 Bulletin 94/02**

(51) Int. Cl.⁵ : **B05D 3/10,** B05D 1/00,
B05D 7/26, B05D 7/02,
B05D 7/16, B05D 5/10

(21) Numéro de dépôt : **90401301.8**

(22) Date de dépôt : **16.05.90**

(54) **Composition liquide à base de solvants organiques facilitant l'adhérence de tout revêtement sur un support.**

(30) Priorité : **16.05.89 FR 8906366**

(43) Date de publication de la demande :
**22.11.90 Bulletin 90/47**

(45) Mention de la délivrance du brevet :
**12.01.94 Bulletin 94/02**

(84) Etats contractants désignés :
**AT BE CH DE DK ES FR GB GR IT LI LU NL SE**

(56) Documents cités :
**US-A- 3 994 751
US-A- 4 247 580
US-A- 4 465 715**

(73) Titulaire : **PARIS LAQUE SERVICE
47, rue Sadi Carnot
F-93300 Aubervilliers (FR)**

(72) Inventeur : **Levy, Maurice
2, Allée de Bretagne
F-95140 Garges les Gonesse (FR)**

(74) Mandataire : **Stalla-Bourdillon, Bernard et al
CABINET NONY & CIE 29, rue Cambacérès
F-75008 Paris (FR)**

## Description

La présente invention a pour objet une composition liquide, à base de solvants organiques, permettant de conduire à une excellente adhérence de tout revêtement sur tout type de support rigide ou semi-rigide.

En vue de faciliter l'adhérence de divers revêtements, en particulier de peinture ou vernis, sur des supports tels que des métaux ferreux ou non-ferreux, la technique actuelle consiste à préparer les surfaces en vue de les debarrasser de toutes les aspérités, ceci par les techniques de ponçage et/ou de sablage et à procéder ensuite notamment dans le cas des tôles de carrosserie à une immersion dans un bain de cataphorèse pour les prémunir contre la corrosion.

Il est admis que les fines rayures ou micro-rayures provoquées sur les surfaces métalliques servent plus ou moins à ancrer les peintures ou vernis qui y sont appliqués.

Dans la mesure où les pièces métalliques ont été préalablement traitées en vue de prévenir les phénomènes d'oxydation par les techniques connues comme l'électrophorèse, on peut obtenir une adhérence généralement jugée satisfaisante.

Toutefois un tel résultat n'est obtenu qu'après de nombreux stades de préparation rendant ces techniques non seulement longues dans leur mise en oeuvre mais également particulièrement onéreuses.

On vient maintenant de constater de façon tout à fait inattendue et surprenante que l'on pouvait obtenir une excellente adhérence de tout revêtement sur tout type de support rigide ou semi-rigide en traitant ces derniers d'une façon simple et économique à l'aide uniquement d'une solution d'un mélange de solvants organiques dont la nature et les proportions sont le résultat de nombreuses études à l'égard de divers types de support.

Grâce à cette solution de solvants organiques, les surfaces des supports à revêtir sont totalement débarrassées de toutes souillures telles que produits gras, poussières, produits paraffiniques, silicones etc... .

On a par ailleurs constaté qu'en traitant ainsi les surfaces à l'aide de cette solution, les phénomènes d'oxydation étaient prévenus et que fait encore plus surprenant l'oxydation préexistante était neutralisée après traitement et application du produit final de revêtement.

Ce phénomène résulte d'un plaquage parfait sur le support de toutes les particules de revêtement qui en se positionnant forment un film homogène rendant étanche la surface recouverte, la protégeant ainsi de l'oxygène atmosphérique principale cause de l'oxydation.

La présente invention a donc pour objet à titre de produit industriel nouveau une composition liquide permettant une excellente adhérence de tout revêtement sur tout type de support rigide ou semi-rigide, cette composition étant constituée d'un mélange de solvants organiques dans les proportions en poids suivantes:

- de 17 à 36% de xylènes,
- de 4 à 14% d'éthylbenzène, et
- de 55 à 75% de white spirit.

Par l'expression "xylènes" on entend bien entendu les mélanges des isomères ortho, méta et para dont les proportions respectives dans la composition selon l'invention n'ont aucune influence sur ses propriétés.

On peut utiliser selon l'invention le produit commercial vendu sous la dénomination de "XYLENE" par la Société LAMSERT-RIVIERE S.A qui est déjà constitué d'un mélange de xylènes dans une proportion d'environ 75 ± 5% en poids et d'éthylbenzène dans une proportion d'environ 25 ± 5% en poids et contenant moins de 1% de toluène.

Le white spirit comme ceci est bien connu est un mélange d'hydrocarbures aliphatiques en une proportion d'environ 95% et d'hydrocarbures aromatiques dans une proportion inférieure à 5%, ces derniers étant essentiellement le propylbenzène, le mésitylène et les xylènes.

Comme white spirit on peut utiliser selon l'invention celui notamment vendu par la Société LAMBERT-RIVIERE S.A sous la dénomination de "WHITE SPIRIT-5".

Le "XYLENE" et le "WHITE SPIRIT-5" se caractérisent essentiellement par le fait qu'ils sont exempts de benzène.

Selon une forme particulière de réalisation, la composition selon l'invention contient en outre de 0,05 à 3 % d'une huile de silicone organofonctionnelle.

Cette huile de silicone organofonctionnelle peut être un méthylpolysiloxane modifié par un polyéther. Elle est essentiellement caractérisée par le fait qu'elle est soluble dans les hydrocarbures aliphatiques mais insolubles dans les hydrocarbures benzéniques et en grande partie soluble dans l'eau.

Comme huile de silicone organofonctionnelle particulièrement appropriée selon cette réalisation particulière de l'invention, on peut notamment mentionner celles vendues par la Société BAYER sous les dénominations de "Baysilone ol 17", "Baysilone ol 44" et "Baysilone ol 31" qui sont plus particulièrement préconisées comme agent d'étalement et d'amélioration de la glissance des surfaces.

Il va de soi que d'autres huiles organofonctionnelles de ce type peuvent être également utilisées sans pour autant modifier les propriétés de la composition selon l'invention.

Selon une forme particulièrement préférée de l'invention, la composition est constituée d'un mélange dans les proportions en poids suivantes:

- de 20 à 30% de xylènes,
- de 5 à 12% d'éthylbenzène,
- de 60 à 70% de white spirit, et éventuellement
- de 0,1 à 1% d'une huile de silicone organofonctionnelle telle que définie ci-dessus.

Les diverses études réalisées en vue de mettre en évidence les propriétés d'adhérence ont été effectuées sur une grande variété de supports et plus particulièrement sur des supports rigides ou semi-rigides portant éventuellement un premier revêtement.

Parmi ces surfaces on peut notamment mentionner l'acier, le fer, le cuivre, le laiton, le chrome, l'étain, l'aluminium, le verre, la faience, le caoutchouc, les plastiques, polyesters, certains matériaux composites, le formica etc... .

Bien entendu, la composition selon l'invention peut être également appliquée sur des surfaces préalablement revêtues d'un revêtement tel que par exemple une couche de peinture en vue de faciliter l'adhérence d'une nouvelle couche.

Il convient de remarquer que l'invention n'est absolument pas limitée à l'adhérence de couches de peinture ou de vernis mais s'applique également à d'autres types de revêtement tels que par exemple des couches de colle ou de joints notamment d'étanchéité qui doivent également parfaitement adhérer sur les surfaces sur lesquelles on les applique.

La technique employée pour le traitement des surfaces consiste en un premier temps à les débarrasser des souillures grossières par lavage à l'eau et séchage.

La composition est ensuite appliquée sur la surface à traiter soit par trempage soit par pulvérisation ou encore par application à l'aide d'un chiffon. Dans ce dernier cas, l'application demande une attention toute particulière car le chiffon doit être particulièrement propre et ne pas laisser sur la surface de fibres. Par ailleurs le chiffon doit être changé fréquemment afin d'éviter la saturation du produit.

Après une période de séchage variable comprise entre environ 40 secondes et quelques minutes à l'air libre ou pendant une période d'environ 15 secondes en cabine, on peut alors procéder à l'application du revêtement désiré.

Il convient d'être particulièrement vigilent à ce que la surface traitée par la composition selon l'invention ne soit pas manipulée avec les doigts car les empreintes provoqueraient sur le support un manque d'adhérence du revêtement.

Bien que l'invention ait été décrite en faisant référence plus particulièrement à l'application d'un revêtement de peinture ou vernis, il va de soi qu'elle s'applique à tout autre type de revêtement tel que chromage, galvanisation, plaquage d'or ou d'argent etc...

On a également constaté de façon tout à fait surprenante que lorsque la composition liquide selon l'invention était présente dans le produit de revêtement lui-même en une proportion variable en fonction de la nature du produit de revêtement et de la solubilité de la composition, il était également possible d'améliorer l'adhérence du revêtement sur le support.

Ainsi par exemple l'addition de 1 à 20% de la composition selon l'invention dans des peintures pour lesquelles le white spirit est un diluant améliore de façon tout à fait remarquable l'adhérence de la peinture sur son support. Des essais en atmosphère d'humidité saline ont permis de mettre en évidence les bonnes propriétés d'adhérence des peintures ainsi modifiées.

La composition selon l'invention constitue donc un additif de choix en vue d'améliorer l'adhérence de divers revêtements en particulier de certains types de peinture.

La composition selon l'invention trouve également une application dans un domaine où une excellente adhérence est également requise à savoir en cosmétique pour les vernis à ongles.

La présente invention a donc également pour objet une composition telle que décrite ci-dessus destinée à être appliquée sur les ongles préalablement à l'application d'un vernis incolore ou coloré.

Selon cette forme de réalisation, la composition est appliquée sur les ongles et on la laisse sécher à l'air libre pendant un temps de 30 à 40 secondes puis on applique le vernis.

On a constaté que les vernis avaient, du fait de ce traitement préalable, une adhérence tout à fait remarquable sur les ongles.

On va maintenant donner à titre d'illustration plusieurs exemples permettant de mettre en évidence les bonnes propriétés d'adhérence de la composition selon l'invention.

EXEMPLE 1(a)

Un ruban adhésif marron d'emballage du commerce ayant une largeur de 50 mm a été disposé sur une plaque de plexiglas préalablament immergée quelques secondes dans un bain contenant la composition liquide suivante:

```
Xylènes................................. 30%

Ethylbenzène............................  8%

"Baysilone ol 17" de la Société Bayer...  0,4%

White spirit q.s.p..................... 100%
```

On a laissé le plexiglas sécher pendant quelques minutes à la température ambiante avant d'appliquer le ruban. Après 20 mn on a procédé au décollage de l'adhésif.

De façon fortuite et surprenante on a constaté qu'il y avait eu transfert de la colle de l'adhésif sur le plexiglas, le support plastique d'origine de l'adhésif étant exempt de toute colle.

La plaque après élimination du ruban adhésif présentait donc une bande marron (couleur de la colle de l'adhésif) d'une largeur de 50 mm.

La colle fixée sur la plaque de plexiglas s'est avérée conserver toutes ses propriétés de fixation. L'adhérence de la colle sur la plaque de plexiglas après traitement avec la composition selon l'invention s'est donc trouvée être supérieure à celle de la colle sur son support initial.

EXEMPLE 1(b)

Sur une plaque de plexiglas carrée de 500 x 500 mm on a disposé en diagonale un ruban adhésif ayant une largeur de 50 mm. L'un des triangles ainsi délimités a été immergé quelques secondes dans un bain contenant la composition liquide suivante :

```
Xylènes ............................... 30%

Ethylbenzène ..........................  8%

"Baysilone ol 17" de la Société Bayer ..  0,4%

White spirit q.s.p ..................... 100%
```

Après séchage quelques minutes à la température ambiante on a appliqué sur le triangle ainsi traité une peinture polyuréthane à deux composants de couleur rouge et sur l'autre triangle non traité une peinture polyuréthane à deux composants de couleur jaune. On a laissé les peintures sécher à 60°C pendant 20 mn.

La plaque présentait donc un triangle rouge et un triangle jaune avec en diagonale une bande d'une largeur de 50 mm.

Différents tests d'adhérence des peintures ont été effectués sur les deux triangles par quadrillages, chocs, découpes sur arêtes et ceui-ci n'ont pas permis de décoller ou même d'écailler la peinture de couleur rouge appliquée sur le plexiglas préalablement traité. Par contre ces mêmes tests réalisés sur l'autre triangle revêtu de la peinture de couleur jaune ont provoqué soit le décollement de la peinture soit la formation d'éclats dénotant ainsi une mauvaise adhérence de la peinture sur le support de plexiglas.

EXEMPLE 2

Une lamelle en acier galvanisé de 200mm de long et de 30mm de large est immergée quelques secondes dans un bain contenant la composition liquide suivante:

"XYLENE" de la Société LAMBERT-RIVIERE S.A contenant:

4

```
Xylènes : 75 + 5%
Ethylbenzène : 25 + 5%.................... 38%
"Baysilone ol 17" de la Société Bayer....  0,1%
White spirit q.s.p...................... 100%
```

Après séchage quelques minutes à la température ambiante on a appliqué au pistolet une laque polyuréthane blanche bi-composant.

Après séchage de la laque on a pratiqué sur la lamelle plusieurs découpes, dans le sens vertical, d'une largeur d'environ 20mm à l'aide d'une scie à métaux.

On a constaté qu'il ne produisait aucun écaillement de la peinture. Par ailleurs les tests de quadrillage, de pliage, de cisaillement, de soyage (emboutissage) et de poinçonnage n'ont pas permis de décoller ou d'écailler la laque blanche appliquée sur la lamelle d'acier galvanisé.

EXEMPLE 3

Un tube en chrome de 1m de long et de 40mm de diamètre est muni en son milieu d'une bande d'adhésif d'une largeur de 19mm.

Une des extrémités ainsi délimitées du tube est plongée quelques secondes dans un bain contenant la composition liquide suivante:

Xylènes         20%
Ethylbenzène    12%
White spirit q.s.p  100%

Après séchage quelques minutes à la température ambiante on applique sur l'ensemble du tube une laque acrylique mate de couleur noire.

Après séchage de la laque on a procédé à l'élimination de la bande d'adhésif et à divers tests d'adhérence de la laque sur la partie préalablement traitée et sur la partie non traitée du tube de chrome.

On a ainsi constaté qu'au niveau de la bague, formée par l'enlèvement de la bande d'adhésif, du côté de la partie traitée les arêtes étaient très nettes et vives et que la laque adhérait parfaitement sur son support aucun décollement ne pouvant être obtenu par grattage à l'ongle ou à l'aide d'un outil tranchant. Par contre du côté de la partie non traitée la laque adhérait mal sur son support et se décollait facilement par simple grattage à l'ongle.

Par ailleurs les tests de quadrillage montrent une adhérence parfaite sur la partie traitée ainsi d'ailleurs que les tests de chocs. Le tube est déformé mais la laque reste fixée sur son support. Ces mêmes tests réalisés sur la partie non traitée du tube de chrome montrent des points de décollement et d'écaillage de la peinture (éclats en étoile).

EXEMPLE 4

Une éprouvette de tôle d'acier (ref 552 brute) d'une dimension de 200 x 100mm a été immergée quelques secondes dans un bain contenant la composition liquide suivante:

```
Xylènes............................... 24%
Ethylbenzène.......................... 10%
"Baysilone ol 17" de la Société Bayer... 0,5%
White spirit q.s.p.................... 100%
```

Après séchage quelques minutes à la température ambiante la tôle est trempée dans une peinture mate acrylique de couleur verte dans le sens de la longueur sur 120mm. Elle est à nouveau trempée dans le même bain mais sur une longueur de 70mm.

Après égouttage et séchage, on procède à une opération de vernissage au trempé dans un vernis bi-composant polyuréthane sur une hauteur de 105mm. Après égouttage on procède à un nouveau bain dans le même vernis sur une hauteur de 95mm. On soumet ensuite la tôle à un séchage à 60°C pendant 30 mn.

Sur la partie non peinte de la tôle on procède à une nouvelle application de la composition liquide selon l'invention ci-dessus décrite et on plonge la tôle sur une hauteur de 70mm dans une peinture polyuréthane bi-composant de couleur vert clair. L'éprouvette est égouttée et de nouveau plongée dans le même bain de peinture sur une hauteur de 60mm. L'éprouvette est ensuite séchée à 60°C pendant 30 mn. et soumise à divers tests sur les différentes épaisseurs de revêtement de la tôle, ces tests étant les suivants:

- Pliages en tous sens de façon à provoquer le cisaillement de l'éprouvette. On constate que le film fait corps avec le support.
- Poinçonnages successifs à intervalle de 2mm. On note aucun écaillement de la peinture.
- Martellage de la tôle au marteau rivoire. On observe aucun écaillement. La peinture est écrouis en même temps que le métal.

Sur les parties martellées on a pratiqué le soyage (emboutissage) à la pince à soyer manuelle et l'on a noté aucun écaillement de la peinture.

<div align="center">

X        X

X

</div>

Les différents exemples et essais précédents montrent que la composition liquide selon l'invention peut être appliquée sur divers supports et permet d'obtenir une adhérence parfaite d'un quelconque revêtement.

**Revendications**

1. Composition liquide permettant une excellente adhérence de tout revêtement sur tout type de support, rigide ou semi-rigide, caractérisée par le fait qu'elle est essentiellement constituée d'un mélange de solvants organiques dans les proportions en poids suivantes:
   - de 17 à 36% de xylènes,
   - de 4 à 14% d'éthylbenzène, et
   - de 55 à 75% de white spirit.

2. Composition selon la revendication 1, caractérisée par le fait qu'elle contient en outre de 0,05 à 3% d'une huile de silicone organofonctionnelle.

3. Composition selon la revendication 2, caractérisée par le fait que l'huile de silicone organofonctionnelle est un méthylpolysiloxane modifié par un polyéther, soluble dans les hydrocarbures aliphatiques mais insoluble dans les hydrocarbures benzéniques et essentiellement soluble dans l'eau.

4. Composition selon l'une quelconque des revendications 1 à 3, caractérisée par le fait qu'elle est de préférence constituée d'un mélange dans les proportions en poids suivantes:
   - de 20 à 30% de xylènes,
   - de 5 à 12% d'éthylbenzène,
   - de 60 à 70% de white spirit, et éventuellement
   - de 0,1 à 1% d'une huile de silicone organofonctionnelle.

5. Utilisation de la composition selon les revendications 1 à 4 pour le traitement de surfaces en acier, cuivre, laiton, chrome, étain, aluminium, verre, faïence, caoutchouc, plastique, polyesters, matériaux composites et formica.

6. Procédé de traitement de surfaces de tout support rigide ou semi-rigide, préalablement à l'application d'un revêtement, caractérisé par le fait qu'il consiste à appliquer sur les surfaces par trempage ou par pulvérisation ou encore à l'aide d'un chiffon une composition selon l'une quelconque des revendications 1 à 4.

7. Procédé selon la revendication 6, caractérisé par le fait que le support est en acier, cuivre, laiton, chrome, étain, aluminium, verre faïence, caoutchouc, plastique, polyester, matériau composite ou formica.

8. Procédé selon l'une quelconque des revendications 6 et 7, caractérisé par le fait que le revêtement est une peinture, un vernis, un chromage, une galvanisation, un plaquage d'or ou d'argent.

9. Procédé selon l'une quelconque des revendications 6 et 7, caractérisé par le fait que le revêtement est

EP 0 398 803 B1

une colle ou un joint.

**10.** Procédé selon l'une quelconque des revendications 6 à 9, caractérisé par le fait que le revêtement est appliqué après une période de séchage comprise entre environ 40 secondes et quelques minutes à l'air libre.

**11.** Utilisation de la composition selon les revendication 1 à 4 comme additif à diverses substances de revêtements en particulier à des peintures.

**12.** Utilisation selon la revendication 11, caractérisée par le fait que la composition est généralement présente en une proportion comprise entre 1 et 20% en poids par rapport à la substance de revêtement.

**13.** Utilisation de la composition selon les revendications 1 à 4 en cosmétique pour le traitement préalable de la surface des ongles destinée à recevoir un vernis incolore ou coloré.


**Patentansprüche**

**1.** Flüssige Zusammensetzung, die eine ausgezeichnete Haftung für alle Überzüge auf jeder Art von steifen oder halb-steifen Unterlagen erlaubt, dadurch gekennzeichnet, daß sie im wesentlichen aus einem Gemisch organischer Lösungsmittel in folgenden Gewichtsverhältnissen zusammengesetzt ist:
   - 17 bis 36 % Xylol,
   - 4 bis 14 % Ethylbenzol, und
   - 55 bis 75 % White Spirit.

**2.** Zusammensetzung nach Anspruch 1, dadurch gekennzeichnet, daß sie weiterhin 0,05 bis 3 % eines organofunktionellen Silikonöls enthält.

**3.** Zusammensetzung nach Anspruch 2, dadurch gekennzeichnet, daß das organofunktionelle Silikonöl ein durch einen Polyether modifiziertes Methylpolysiloxan ist, das in aliphatischen Kohlenwasserstoffen löslich, in Benzolkohlenwasserstoffen unlöslich und in Wasser im wesentlichen löslich ist.

**4.** Zusammensetzung nach einem der Ansprüche 1 bis 3, dadurch gekennzeichnet, daß sie vorzugsweise aus einem Gemisch in folgenden Gewichtsverhältnissen zusammengesetzt ist:
   - 20 bis 30 % Xylol,
   - 5 bis 12 % Ethylbenzol,
   - 60 bis 70 % White Spirit, und gegebenenfalls
   - 0,1 bis 1 % eines organofunktionellen Silikonöls.

**5.** Verwendung der Zusammensetzung nach einem der Ansprüche 1 bis 4 zur Behandlung von Oberflächen aus Stahl, Kupfer, Messing, Chrom, Zinn, Aluminium, Glas, Fayence, Kautschuk, Kunststoff, Polyester, Verbundmaterialien und Formica-Material.

**6.** Verfahren zur Behandlung von Oberflächen steifer oder halb-steifer Unterlagen, vor dem Aufbringen eines Überzugs, das dadurch gekennzeichnet ist, daß man auf die Oberflächen durch Tauchen, Pulverisation oder mit Hilfe eines Chiffons eine Zusammensetzung nach einem der Ansprüche 1 bis 4 aufbringt.

**7.** Verfahren nach Anspruch 6, dadurch gekennzeichnet, daß die Unterlage Stahl, Kupfer, Messing, Chrom, Zinn, Aluminium, Fayence-Glas, Kautschuk, Kunststoff, Polyester, Verbundmaterialien oder Formica-Material ist.

**8.** Verfahren nach einem der Ansprüche 6 und 7, dadurch gekennzeichnet, daß der Überzug eine Farbe, ein Lack, eine Verchromung, eine Galvanisierung, eine Platierung aus Gold oder Silber ist.

**9.** Verfahren nach einem der Ansprüche 6 und 7, dadurch gekennzeichnet, daß der Überzug ein Klebstoff oder eine Verbindungsstelle ist.

**10.** Verfahren nach einem der Ansprüche 6 bis 9, dadurch gekennzeichnet, daß der Überzug nach einer Trocknungszeit zwischen etwa 40 Sekunden und einigen Minuten an der freien Luft aufgebracht wird.

7

**11.** Verwendung der Zusammensetzung nach den Ansprüchen 1 bis 4 als Additiv zu verschiedenen Überzugsmaterialien, im besondere zu Anstrichfarben.

**12.** Verwendung nach Anspruch il, dadurch gekennzeichnet, daß die Zusammensetzung im allgemeinen in einem Verhältnis zwischen 1 Gew.-% und 20 Gew.-%, bezogen auf das Überzugsmaterial, vorliegt.

**13.** Verwendung der Zusammensetzung nach den Ansprüchen 1 bis 4 in der Kosmetik für die Vorbehandlung der Oberfläche von Fingernägeln, auf die ein farbloser oder farbiger Lack aufgebracht werden soll.

## Revendications

**1.** Liquid composition making possible an excellent adherence of any coating on any type of rigid or semirigid substrate, characterised in that it is made up essentially of a mixture of organic solvents in the following proportions by weight:
- from 17 to 36 % of xylenes,
- from 4 to 14 % of ethylbenzene, and
- from 55 to 75 % of white spirit.

**2.** Composition according to Claim 1, characterised in that it additionally contains from 0.05 to 3 % of an organofunctional silicone oil.

**3.** Composition according to Claim 2, characterised in that the organofunctional silicone oil is a methylpolysiloxane modified with a polyether, soluble in aliphatic hydrocarbons but insoluble in benzenoid hydrocarbons and essentially soluble in water.

**4.** Composition according to any one of Claims 1 to 3, characterised in that it is preferably made up to a mixture in the following proportions by weight:
- from 20 to 30 % of xylenes,
- from 5 to 12 % of ethylbenzene,
- from 60 to 70 % of white spirit, and optionally
- from 0.1 to 1 % of an organofunctional silicone oil.

**5.** Use of the composition according to Claims 1 to 4 for the treatment of surfaces made of steel, copper, brass, chromium, tin, aluminium, glass, faience, rubber, plastic, polyesters, composite materials and formica.

**6.** Process for treating surfaces of any rigid or semirigid substrate before the application of a coating, characterised in that it consists in applying a composition according to any one of Claims 1 to 4 onto the surfaces by soaking or by spraying or else with the aid of a rag.

**7.** Process according to Claim 6, characterised in that the substrate is made of steel, copper, brass, chromium, tin, aluminium, glass, faience, rubber, plastic, polyester, composite material or formica.

**8.** Process according to either of Claims 6 and 7, characterised in that the coating is a paint, a varnish, a chromium plating, a galvanisation or a gold or silver plating.

**9.** Process according to either of Claims 6 and 7, characterised in that the coating is an adhesive or a seal.

**10.** Process according to any one of Claims 6 to 9, characterised in that the coating is applied after a drying period of between approximately 40 seconds and a few minutes in the open air.

**11.** Use of the composition according to Claim 1 to 4 as additive to various substances for coatings, in particular to paints.

**12.** Use according to Claim 11, characterised in that the composition is generally present in a proportion of between 1 and 20 % by weight relative to the coating substance.

**13.** Use of the composition according to Claims 1 to 4 in cosmetic for the preliminary treatment of the surface of (finger)nails intended to receive a colourless or coloured varnish.